# EUROPÄISCHE PATENTSCHRIFT

(11) **EP 3 510 515 B1**
(45) Veröffentlichungstag und Bekanntmachung des Hinweises auf die Patenterteilung: **09.02.2022**
(21) Anmeldenummer: 17758543.7
(22) Anmeldetag: 29.08.2017
(51) Int. Cl.: G06F 21/31, G06F 21/64

(54) **DATENBRILLE ZUM KRYPTOGRAPHISCHEN SIGNIEREN VON BILDDATEN**
DATA GLASSES FOR CRYPTOGRAPHICALLY SIGNING IMAGE DATA
LUNETTES INTELLIGENTES PERMETTANT LA SIGNATURE CRYPTOGRAPHIQUE DE DONNÉES D'IMAGE

(30) Priorität: 07.09.2016 DE 102016116770
(43) Veröffentlichungstag der Anmeldung: 17.07.2019
(60) Teilanmeldung: 21195489.6
(73) Patentinhaber: Bundesdruckerei GmbH, 10969 Berlin (DE)
(72) Erfinder: DIETRICH, Frank, 12437 Berlin (DE); DRESSEL, Olaf, 14641 Wustermark (DE)
(74) Vertreter: Patentship Patentanwaltsgesellschaft mbH
(86) Internationale Anmeldenummer: PCT/EP2017/071621
(87) Internationale Veröffentlichungsnummer: WO 2018/046347

(56) Entgegenhaltungen:
- WO-A1-2014/127429
- WO-A1-2016/114891
- US-A1- 2015 324 568
- US-B1- 9 331 856
- DocuSign: "DocuSign - Blink", , 31. März 2014 (2014-03-31), XP054977819, Gefunden im Internet: URL:https://www.youtube.com/watch?v=ia_MA8 ZBJeI [gefunden am 2017-10-24]

## Beschreibung

Die vorliegende Erfindung betrifft das Gebiet der kryptographischen Signierung von Bilddaten, insbesondere zur Dokumentation von Produktionsschritten in Produktionsumgebungen.

Die Offenlegungsschrift US 2015/324568 A1 offenbart ein "head mounted display", welches beispielsweise Fotos oder Videoclips seiner Umgebung aufnehmen kann und die entsprechenden Daten in die Cloud an einen Server senden kann.

Die Offenlegungsschrift WO 2014/127429 A1 beschreibt ein Netzwerkgerät, welches beispielsweise eine Datenbrille sein kann, wobei diesem Netzwerkgerät ein eigener privater Schlüssel zugeordnet ist. Der zu diesem privaten Schlüssel zugehörige öffentliche Schlüssel liegt in der Cloud vor.

Die Offenlegungsschrift WO 2016/114891 A1 offenbart ein Verfahren zum Überprüfen, dass ein Nutzer Zugriff auf eine elektronische Vorrichtung erhalten darf.

Die Patentschrift US 9 331 856 B1 offenbart ein computerimplementiertes Verfahren zum Validieren von digitalen Signaturen.

Der Artikel "DocuSign: "DocuSign - Blink", 31. März 2014 (2014-03-31), XP054977819, Gefunden im Internet: URL:https://www.youtube.com/watch?v=ia_MA8ZBJel [gefunden am 2017-10-24]" offenbart eine Transaktionsverwaltungsplattform.

In heutigen und zukünftigen Produktionsumgebungen besteht ein Bedarf, von Menschen durchgeführte Produktionsschritte revisionssicher zu dokumentieren und die Durchführung der Produktionsschritte nachweisen zu können. Die Dokumentation der Produktionsschritte kann beispielsweise schriftlich erfolgen, wobei mittels einer Unterschrift die Durchführung eines Produktionsschrittes dokumentiert und bestätigt wird. Dies ist typischerweise mit einem hohen Verwaltungsaufwand und einem hohen Zeitverlust bei der Dokumentation der Produktionsschritte verbunden. Ferner erfolgt eine Dokumentation der Produktionsschritte üblicherweise rein schriftlich.

Zur Dokumentation von Produktionsschritten in Produktionsumgebungen ist mithin eine Lösung wünschenswert, welche eine erhöhte Effizienz, insbesondere hinsichtlich des Verwaltungsaufwands und der erforderlichen Dokumentationszeit, aufweist. Ferner ist es wünschenswert, Bilder der Produktionsschritte oder der Produktionsergebnisse in die Dokumentation mit einzubeziehen.

Es ist daher eine Aufgabe der vorliegenden Erfindung, ein effizientes Konzept zur Dokumentation von Produktionsschritten in Produktionsumgebungen zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch eine Datenbrille gelöst werden kann, welche Bilddaten an eine Signaturerstellungseinheit aussenden kann, um die Bilddaten mit einer kryptographischen Signatur eines Nutzers zu versehen.

Zur Authentifizierung des Nutzers wird eine Authentifizierungseinrichtung verwendet, welche den Nutzer authentifizieren kann und bei erfolgreicher Authentifizierung die Signierung der Bilddaten durch die Signaturerstellungseinheit auslöst. Durch die enge Kopplung des Nutzers an die Datenbrille ist folglich eine hochwertige Authentifizierung des Nutzers möglich. Die Authentifizierung des Nutzers kann insbesondere gegenüber der Datenbrille erfolgen.

Dadurch wird der Vorteil erreicht, dass eine Dokumentation von Produktionsschritten in Produktionsumgebungen durch den Nutzer mit hoher Effizienz erreicht werden kann. Ferner können Bilder bzw. Bilddaten in die Dokumentation mit einbezogen werden.

Gemäß einem ersten Aspekt betrifft die Erfindung ein System zum kryptographischen Signieren von Bilddaten gemäß Anspruch 1 mit einer Datenbrille und einer Signaturerstellungseinheit, wobei die Datenbrille durch einen Nutzer tragbar ist. Das System umfasst eine Bildkamera, welche ausgebildet ist, ein Bild zu erfassen, um die Bilddaten zu erhalten, wobei die Bilddaten das erfasste Bild repräsentieren. Das System umfasst ferner eine Authentifizierungseinrichtung, welche ausgebildet ist, den Nutzer zu authentifizieren. Das System umfasst zudem eine Kommunikationsschnittstelle, welche ausgebildet ist, ansprechend auf die Authentifizierung des Nutzers, die Bilddaten an die Signaturerstellungseinheit auszusenden, um die Bilddaten kryptographisch zu signieren. Dadurch wird der Vorteil erreicht, dass eine effiziente Dokumentation von Produktionsschritten in Produktionsumgebungen unter Einbeziehung von Bilddaten realisiert werden kann.

Das System umfasst die Signaturerstellungseinheit. Dadurch wird der Vorteil erreicht, dass die Signierung der Bilddaten lokal durch die Datenbrille erfolgen kann.

Gemäß einer Ausführungsform ist die Kommunikationsschnittstelle ausgebildet, mit der Signaturerstellungseinheit über ein Kommunikationsnetzwerk zu kommunizieren, wobei die Kommunikationsschnittstelle ausgebildet ist, die Bilddaten über das Kommunikationsnetzwerk an die Signaturerstellungseinheit auszusenden. Dadurch wird der Vorteil erreicht, dass eine dedizierte Signaturerstellungseinheit verwendet werden kann, welche über das Kommunikationsnetzwerk erreichbar ist.

Gemäß einer Ausführungsform umfasst das System einen Speicher, wobei die Kommunikationsschnittstelle ausgebildet ist, kryptographisch signierten Bilddaten von der Signaturerstellungseinheit zu empfangen, und wobei die Kommunikationsschnittstelle ausgebildet ist, die kryptographisch signierten Bilddaten in dem Speicher zu speichern. Dadurch wird der Vorteil erreicht, dass die kryptographisch signierten Bilddaten der Datenbrille oder dem Nutzer effizient zugeordnet werden können.

Gemäß einer Ausführungsform umfasst das System einen Speicher, wobei die Kommunikationsschnittstelle ausgebildet ist, kryptographisch signierten Bilddaten von der Signaturerstellungseinheit über das Kommunikationsnetzwerk zu empfangen, und wobei die Kommunikationsschnittstelle ausgebildet ist, die kryptographisch signierten Bilddaten in dem Speicher zu speichern. Dadurch wird der Vorteil erreicht, dass die kryptographisch signierten Bilddaten der Datenbrille oder dem Nutzer effizient zugeordnet werden können.

Die Authentifizierungseinrichtung umfasst ein Tastenfeld zum Erfassen eines Kennwortes des Nutzers, wobei die Authentifizierungseinrichtung ausgebildet ist, das erfasste Kennwort mit einem vorgespeicherten Kennwort zu vergleichen, und den Nutzer zu authentifizieren, falls das erfasste Kennwort dem vorgespeicherten Kennwort entspricht. Dadurch wird der Vorteil erreicht, dass eine Authentifizierung des Nutzers effizient realisiert werden kann. Das erfasste Kennwort und das vorgespeicherte Kennwort können persönliche Identifikationsnummern (PINs) sein.

Gemäß einer Ausführungsform umfasst die Datenbrille einen Brillenbügel, wobei das Tastenfeld an dem Brillenbügel angeordnet ist. Dadurch wird der Vorteil erreicht, dass das Tastenfeld für den Nutzer einfach erreichbar ist.

Gemäß einer Ausführungsform umfasst die Authentifizierungseinrichtung einen Beschleunigungssensor zum Erfassen eines Bewegungsmusters des Nutzers, wobei die Authentifizierungseinrichtung ausgebildet ist, das erfasste Bewegungsmuster mit einem vorgespeicherten Bewegungsmuster zu vergleichen, und den Nutzer zu authentifizieren, falls das erfasste Bewegungsmuster dem vorgespeicherten Bewegungsmuster entspricht. Dadurch wird der Vorteil erreicht, dass charakteristische Bewegungen des Nutzers zur Authentifizierung des Nutzers verwendet werden können.

Gemäß einer Ausführungsform ist der Beschleunigungssensor ausgebildet, ein Kopfbewegungsmuster des Nutzers als Bewegungsmuster des Nutzers zu erfassen. Dadurch wird der Vorteil erreicht, dass eine Authentifizierung des Nutzers durch eine Bewegung des Kopfes des Nutzers realisiert werden kann. Das erfasste Bewegungsmuster des Nutzers und das vorgespeicherte Bewegungsmuster des Nutzers können beispielsweise ein Nicken oder ein Schütteln des Kopfes repräsentieren.

Gemäß einer Ausführungsform umfasst die Datenbrille eine Anzeigeeinrichtung, wobei die Anzeigeeinrichtung ausgebildet ist, das erfasste Bild dem Nutzer anzuzeigen. Dadurch wird der Vorteil erreicht, dass der Nutzer das erfasste Bild vor der Signierung der Bilddaten verifizieren kann.

Gemäß einer Ausführungsform umfasst die Datenbrille eine Anzeigeeinrichtung, wobei die Anzeigeeinrichtung ausgebildet ist, das erfasste Bild in ein Sichtfeld des Nutzers einzublenden. Dadurch wird der Vorteil erreicht, dass der Nutzer das erfasste Bild vor der Signierung der Bilddaten verifizieren kann.

Gemäß einer Ausführungsform umfasst die Datenbrille eine Anzeigeeinrichtung, wobei die Anzeigeeinrichtung ausgebildet ist, eine Mehrzahl von Hilfslinien in ein Sichtfeld des Nutzers einzublenden, wobei die Mehrzahl von Hilfslinien einen Erfassungsbereich der Bildkamera zum Erfassen des Bildes repräsentieren. Dadurch wird der Vorteil erreicht, dass ein zu erfassendes Bild effizient durch den Nutzer bestimmt werden kann.

Die Signaturerstellungseinheit dient zum Kommunizieren mit der Datenbrille. Die Signaturerstellungseinheit umfasst eine Kommunikationsschnittstelle, welche ausgebildet ist, die Bilddaten von der Datenbrille zu empfangen. Die Signaturerstellungseinheit umfasst ferner einen Prozessor, welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist. Dadurch wird der Vorteil erreicht, dass eine effiziente Dokumentation von Produktionsschritten in Produktionsumgebungen unter Einbeziehung von Bilddaten realisiert werden kann. Die kryptographische Signierung kann auf der Basis einer Public-Key-Infrastruktur erfolgen. Dem privaten Signaturschlüssel kann ein öffentlicher Signaturprüfschlüssel zugeordnet sein, wobei der private Signaturschlüssel und der öffentliche Signaturprüfschlüssel ein kryptographisches Schlüsselpaar bilden.

Das System umfasst die Signaturerstellungseinheit. Dadurch wird der Vorteil erreicht, dass die Signierung der Bilddaten lokal durch die Datenbrille erfolgen kann.

Gemäß einer Ausführungsform ist die Kommunikationsschnittstelle der Signaturerstellungseinheit ausgebildet, mit der Datenbrille über ein Kommunikationsnetzwerk zu kommunizieren, wobei die Kommunikationsschnittstelle ausgebildet ist, die Bilddaten über das Kommunikationsnetzwerk von der Datenbrille zu empfangen. Dadurch wird der Vorteil erreicht, dass eine dedizierte Signaturerstellungseinheit verwendet werden kann, welche über das Kommunikationsnetzwerk erreichbar ist.

Gemäß einer Ausführungsform ist die Kommunikationsschnittstelle der Signaturerstellungseinheit ausgebildet, die kryptographisch signierten Bilddaten an die Datenbrille auszusenden. Dadurch wird der Vorteil erreicht, dass die kryptographisch signierten Bilddaten der Datenbrille oder dem Nutzer effizient zugeordnet werden können.

Gemäß einer Ausführungsform umfasst die Signaturerstellungseinheit eine Datenbank, wobei der Prozessor ausgebildet ist, die kryptographisch signierten Bilddaten in der Datenbank zu speichern. Dadurch wird der Vorteil erreicht, dass die kryptographisch signierten Bilddaten effizient verwaltet und archiviert werden können.

Mit dem System wird der Vorteil erreicht, dass eine effiziente Dokumentation von Produktionsschritten in Produktionsumgebungen unter Einbeziehung von Bilddaten realisiert werden kann.

Gemäß einem zweiten Aspekt betrifft die Erfindung ein Verfahren zum kryptographischen Signieren von Bilddaten unter Verwendung einer Datenbrille und einer Signaturerstellungseinheit gemäß Anspruch 10. Dadurch wird der Vorteil erreicht, dass eine effiziente Dokumentation von Produktionsschritten in Produktionsumgebungen unter Einbeziehung von Bilddaten realisiert werden kann.

Das Verfahren kann durch das System ausgeführt werden. Weitere Merkmale des Verfahrens ergeben sich unmittelbar aus den Merkmalen und/oder der Funktionalität der Datenbrille.

Gemäß einem dritten Aspekt betrifft die Erfindung ein Computerprogramm mit einem Programmcode zum Ausführen des Verfahrens gemäß dem zweiten Aspekt der Erfindung auf einem System gemäß dem ersten Aspekt der Erfindung. Dadurch wird der Vorteil erreicht, dass die Verfahren automatisiert ausgeführt werden können. Die Datenbrille und/oder die Signaturerstellungseinheit können programmtechnisch eingerichtet sein, um den Programmcode oder Teile des Programmcodes auszuführen. Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm einer Datenbrille zum kryptographischen Signieren von Bilddaten;
- Fig. 2: ein schematisches Diagramm einer Signaturerstellungseinheit zum Kommunizieren mit einer Datenbrille;
- Fig. 3: ein schematisches Diagramm eines Systems zum kryptographischen Signieren von Bilddaten;
- Fig. 4: ein schematisches Diagramm eines Verfahrens zum kryptographischen Signieren von Bilddaten; und

- Fig. 5: ein schematisches Diagramm eines Verfahrens zum Kommunizieren mit einer Datenbrille.

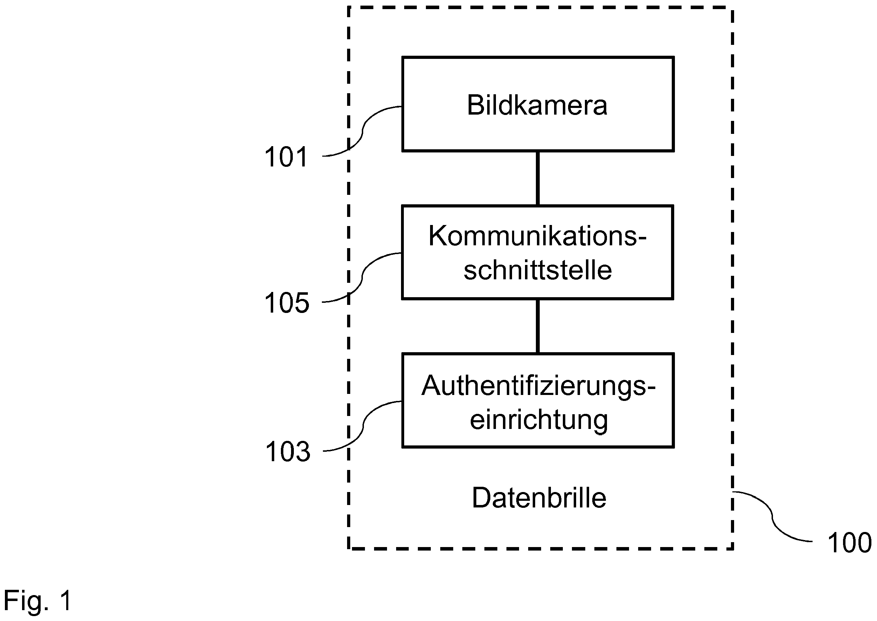

Fig. 1 zeigt ein schematisches Diagramm einer Datenbrille 100 zum kryptographischen Signieren von Bilddaten unter Verwendung einer Signaturerstellungseinheit, wobei die Datenbrille 100 durch einen Nutzer tragbar ist.

Die Datenbrille 100 umfasst eine Bildkamera 101, welche ausgebildet ist, ein Bild zu erfassen, um die Bilddaten zu erhalten, wobei die Bilddaten das erfasste Bild repräsentieren. Die Datenbrille 100 umfasst ferner eine Authentifizierungseinrichtung 103, welche ausgebildet ist, den Nutzer zu authentifizieren. Die Datenbrille 100 umfasst zudem eine Kommunikationsschnittstelle 105, welche ausgebildet ist, ansprechend auf die Authentifizierung des Nutzers, die Bilddaten an die Signaturerstellungseinheit auszusenden, um die Bilddaten kryptographisch zu signieren.

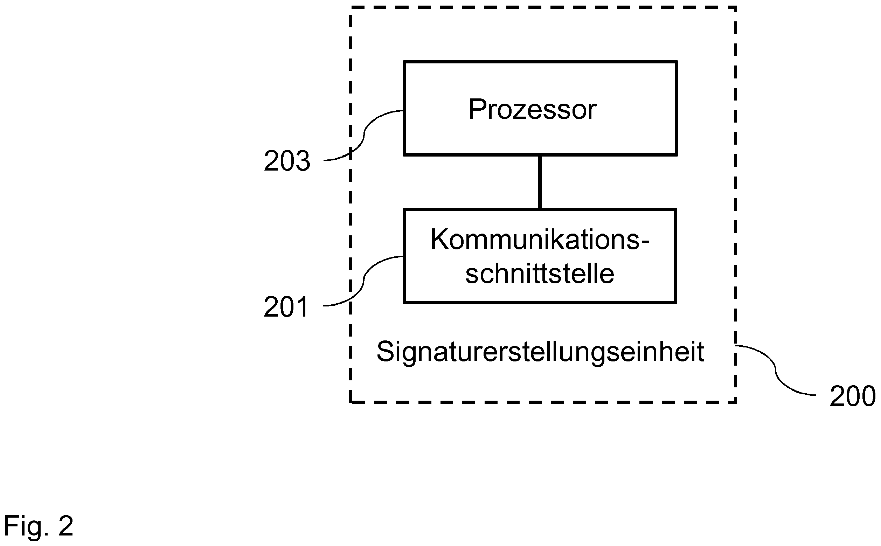

Fig. 2 zeigt eine Signaturerstellungseinheit 200 zum Kommunizieren mit einer Datenbrille. Die Datenbrille ist ausgebildet, ein Bild zu erfassen, um Bilddaten zu erhalten, wobei die Bilddaten das erfasste Bild repräsentieren. Die Datenbrille ist ferner ausgebildet, einen Nutzer zu authentifizieren. Die Datenbrille ist zudem ausgebildet, ansprechend auf die Authentifizierung des Nutzers, die Bilddaten an die Signaturerstellungseinheit 200 auszusenden.

Die Signaturerstellungseinheit 200 umfasst eine Kommunikationsschnittstelle 201, welche ausgebildet ist, die Bilddaten von der Datenbrille zu empfangen. Die Signaturerstellungseinheit 200 umfasst ferner einen Prozessor 203, welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist.

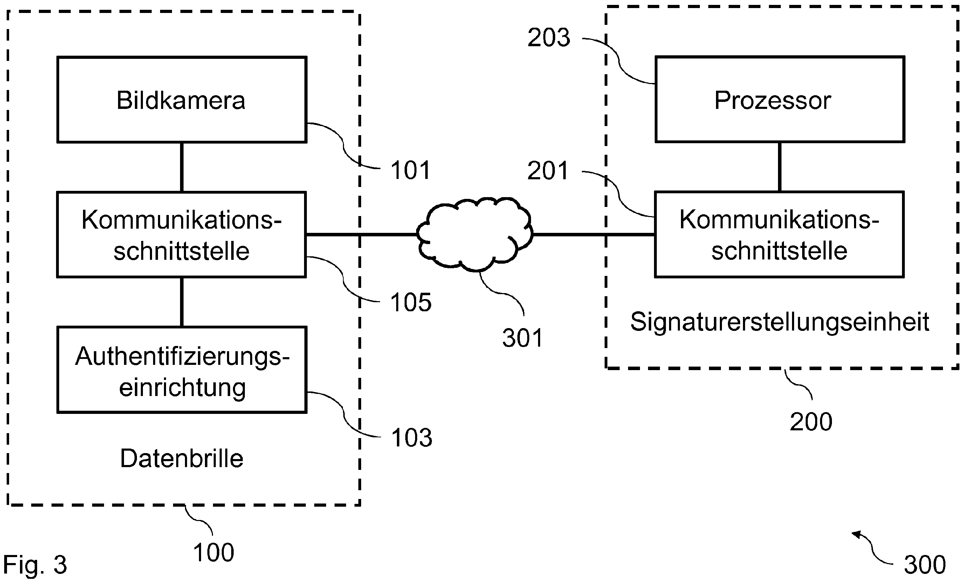

Fig. 3 zeigt ein schematisches Diagramm eines Systems 300 zum kryptographischen Signieren von Bilddaten. Das System 300 umfasst eine Datenbrille 100 und eine Signaturerstellungseinheit 200. Die Datenbrille 100 und die Signaturerstellungseinheit 200 kommunizieren über ein Kommunikationsnetzwerk 301. Die Datenbrille 100 ist durch einen Nutzer tragbar.

Die Datenbrille 100 umfasst eine Bildkamera 101, welche ausgebildet ist, ein Bild zu erfassen, um die Bilddaten zu erhalten, wobei die Bilddaten das erfasste Bild repräsentieren. Die Datenbrille 100 umfasst ferner eine Authentifizierungseinrichtung 103, welche ausgebildet ist, den Nutzer zu authentifizieren. Die Datenbrille 100 umfasst zudem eine Kommunikationsschnittstelle 105, welche ausgebildet ist, ansprechend auf die Authentifizierung des Nutzers, die Bilddaten, beispielsweise über das Kommunikationsnetzwerk 301, an die Signaturerstellungseinheit 200 auszusenden.

Die Signaturerstellungseinheit 200 umfasst eine Kommunikationsschnittstelle 201, welche ausgebildet ist, die Bilddaten von der Datenbrille, beispielsweise über das Kommunikationsnetzwerk 301, zu empfangen. Die Signaturerstellungseinheit 200 umfasst ferner einen Prozessor 203, welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist.

Gemäß einer Ausführungsform umfasst die Datenbrille 100 die Signaturerstellungseinheit 200. Mithin kann auf das Kommunikationsnetzwerk 301 verzichtet werden.

Durch ein Wearable, beispielsweise die Datenbrille 100, besteht die Möglichkeit, eine enge Kopplung zwischen dem Wearable und dem Nutzer, welcher das Wearable trägt, zu realisieren. Folglich kann ein Auslösen einer Signierung durch das Wearable, beispielsweise die Datenbrille 100, erfolgen.

Eine Dokumentation einer Durchführung eines Prozessschrittes kann auf elektronischem Weg durch eine kryptographische Signatur erfolgen. Der Vorgang des kryptographischen Signierens kann beispielsweise die folgenden Merkmale umfassen:
- Auswahl und Überprüfung der zu signierenden Bilddaten;
- Aussenden der Bilddaten an die Signaturerstellungseinheit 200; und
- Auslösen der Signierung durch eine geeignete Art der Willensbekundung.

Durch die Datenbrille 100 ist es möglich, die zu signierenden Bilddaten und/oder weitere Informationen während eines Arbeitsprozesses anzuzeigen bzw. durch die eingebaute Bildkamera 101 aufzunehmen und an die Signaturerstellungseinheit 200 zu senden, welche vertrauenswürdig sein kann. Beispielsweise auf Grundlage der eIDAS-Verordnung der Europäischen Union ist es möglich, eine serverbasierte Signaturerstellungseinheit 200 zu verwenden, welche den Anforderungen einer qualifizierten elektronischen Signatur (QES) genügen kann. Um die entsprechenden Anforderungen zu erfüllen, ist eine hochwertige Authentifizierung für das Auslösen der kryptographischen Signierung über eine Willensbekundung wünschenswert.

Die enge Kopplung zwischen der Datenbrille 100 und dem Nutzer, beispielsweise durch ein individuelles, mehrstelliges Kennwort und/oder eine Interaktion des Nutzers mit der Datenbrille 100 ermöglicht eine starke Authentifizierung des Nutzers für die Signaturerstellungseinheit 200 und somit ein Auslösen der kryptographischen Signierung. Gemäß einer Ausführungsform ist die Signaturerstellungseinheit 200 in Produktions-Lokale-Geräte der Produktionsumgebung integriert.

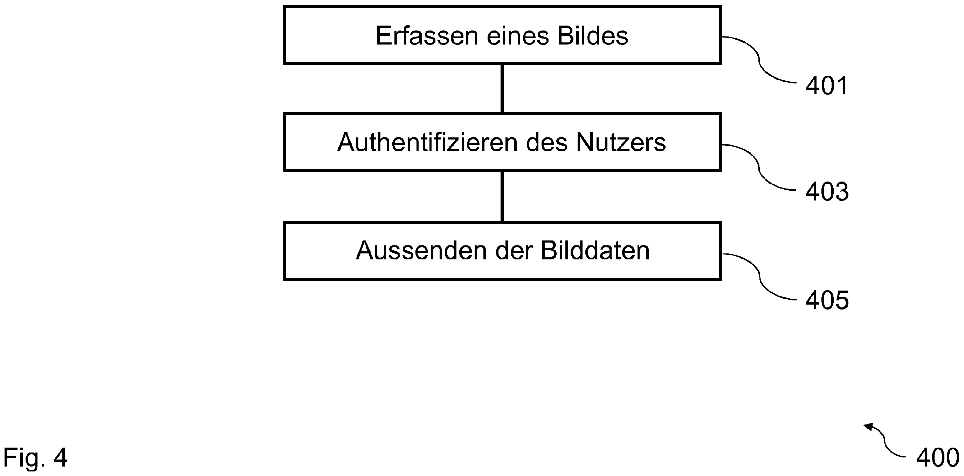

Fig. 4 zeigt ein schematisches Diagramm eines Verfahrens 400 zum kryptographischen Signieren von Bilddaten unter Verwendung einer Datenbrille und einer Signaturerstellungseinheit. Die Datenbrille umfasst eine Bildkamera, eine Authentifizierungseinrichtung und eine Kommunikationsschnittstelle. Die Datenbrille ist durch einen Nutzer tragbar.

Das Verfahren 400 umfasst ein Erfassen 401 eines Bildes durch die Bildkamera, um die Bilddaten zu erhalten, wobei die Bilddaten das erfasste Bild repräsentieren, ein Authentifizieren 403 des Nutzers durch die Authentifizierungseinrichtung, und, ansprechend auf die Authentifizierung des Nutzers, ein Aussenden 405 der Bilddaten an die Signaturerstellungseinheit durch die Kommunikationsschnittstelle, um die Bilddaten kryptographisch zu signieren.

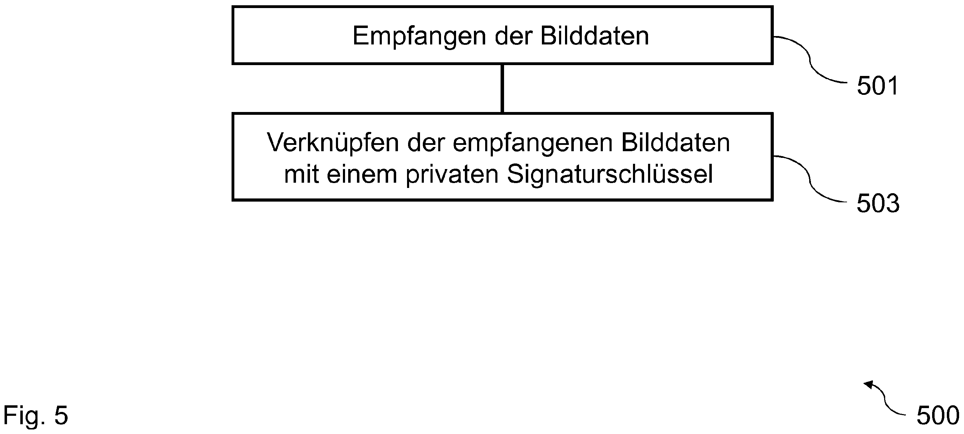

Fig. 5 zeigt ein schematisches Diagramm eines Verfahrens 500 zum Kommunizieren mit einer Datenbrille unter Verwendung einer Signaturerstellungseinheit. Die Signaturerstellungseinheit umfasst eine Kommunikationsschnittstelle und einen Prozessor. Die Datenbrille ist ausgebildet, ein Bild zu erfassen, um Bilddaten zu erhalten, wobei die Bilddaten das erfasste Bild repräsentieren. Die Datenbrille ist ferner ausgebildet, einen Nutzer zu authentifizieren. Die Datenbrille ist zudem ausgebildet, ansprechend auf die Authentifizierung des Nutzers, die Bilddaten an die Signaturerstellungseinheit auszusenden.

Das Verfahren 500 umfasst ein Empfangen 501 der Bilddaten von der Datenbrille durch die Kommunikationsschnittstelle, und ein Verknüpfen 503 der empfangenen Bilddaten mit einem privaten Signaturschlüssel durch den Prozessor, um kryptographisch signierte Bilddaten zu erhalten, wobei der private Signaturschlüssel dem Nutzer zugeordnet ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Datenbrille
- 101: Bildkamera
- 103: Authentifizierungseinrichtung
- 105: Kommunikationsschnittstelle

- 200: Signaturerstellungseinheit
- 201: Kommunikationsschnittstelle
- 203: Prozessor

- 300: System
- 301: Kommunikationsnetzwerk

- 400: Verfahren zum kryptographischen Signieren von Bilddaten
- 401: Erfassen eines Bildes
- 403: Authentifizieren des Nutzers
- 405: Aussenden der Bilddaten

- 500: Verfahren zum Kommunizieren mit einer Datenbrille
- 501: Empfangen der Bilddaten
- 503: Verknüpfen der empfangenen Bilddaten mit einem privaten Signaturschlüssel

## Patentansprüche

1. System (300) zum kryptographischen Signieren von Bilddaten, mit:
einer Datenbrille (100) zum Aussenden von Bilddaten an eine Signaturerstellungseinheit (200), wobei die Datenbrille (100) durch einen Nutzer tragbar ist, mit:
einer Bildkamera (101), welche ausgebildet ist, ein Bild zu erfassen, um die Bilddaten zu erhalten, wobei die Bilddaten das erfasste Bild repräsentieren;
einer Authentifizierungseinrichtung (103), welche ausgebildet ist, den Nutzer zu authentifizieren,
wobei die Authentifizierungseinrichtung (103) ein Tastenfeld zum Erfassen eines Kennwortes des Nutzers umfasst, und wobei die Authentifizierungseinrichtung (103) ausgebildet ist, das erfasste Kennwort mit einem vorgespeicherten Kennwort zu vergleichen, und den Nutzer zu authentifizieren, falls das erfasste Kennwort dem vorgespeicherten Kennwort entspricht;
einer Kommunikationsschnittstelle (105), welche ausgebildet ist, ansprechend auf die Authentifizierung des Nutzers, die Bilddaten an die Signaturerstellungseinheit (200) auszusenden, um die Bilddaten kryptographisch zu signieren; und
einer Signaturerstellungseinheit (200) zum Kommunizieren mit der Datenbrille (100), mit einer Kommunikationsschnittstelle (201), welche ausgebildet ist, die Bilddaten von der Datenbrille (100) zu empfangen; und
einem Prozessor (203), welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist.

2. System (300) nach Anspruch 1, wobei die Kommunikationsschnittstelle (105) der Datenbrille (100) ausgebildet ist, mit der Signaturerstellungseinheit (200) über ein Kommunikationsnetzwerk (301) zu kommunizieren, und wobei die Kommunikationsschnittstelle (105) der Datenbrille (100) ausgebildet ist, die Bilddaten über das Kommunikationsnetzwerk (301) an die Signaturerstellungseinheit (200) auszusenden.

3. System (300) nach Anspruch 1 oder 2, wobei die Datenbrille (100) einen Speicher umfasst, wobei die Kommunikationsschnittstelle (105) der Datenbrille (100) ausgebildet ist, kryptographisch signierten Bilddaten von der Signaturerstellungseinheit (200) zu empfangen, und wobei die Kommunikationsschnittstelle (105) der Datenbrille (100) ausgebildet ist, die kryptographisch signierten Bilddaten in dem Speicher zu speichern.

4. System (300) nach einem der vorstehenden Ansprüche, wobei die Authentifizierungseinrichtung (103) einen Beschleunigungssensor zum Erfassen eines Bewegungsmusters des Nutzers umfasst, und wobei die Authentifizierungseinrichtung (103) ausgebildet ist, das erfasste Bewegungsmuster mit einem vorgespeicherten Bewegungsmuster zu vergleichen, und den Nutzer zu authentifizieren, falls das erfasste Bewegungsmuster dem vorgespeicherten Bewegungsmuster entspricht.

5. System (300) nach Anspruch 4, wobei der Beschleunigungssensor ausgebildet ist, ein Kopfbewegungsmuster des Nutzers als Bewegungsmuster des Nutzers zu erfassen.

6. System (300) nach einem der vorstehenden Ansprüche, wobei die Datenbrille (100) eine Anzeigeeinrichtung umfasst, und wobei die Anzeigeeinrichtung ausgebildet ist, das erfasste Bild dem Nutzer anzuzeigen.

7. System (300) nach Anspruch 1, wobei die Kommunikationsschnittstelle (201) der Signaturerstellungseinheit (200) ausgebildet ist, mit der Datenbrille (100) über ein Kommunikationsnetzwerk (301) zu kommunizieren, und wobei die Kommunikationsschnittstelle (201) der Signaturerstellungseinheit (200) ausgebildet ist, die Bilddaten über das Kommunikationsnetzwerk (301) von der Datenbrille (100) zu empfangen.

8. System (300) nach Anspruch 1 oder 7, wobei die Kommunikationsschnittstelle (201) der Signaturerstellungseinheit (200) ausgebildet ist, die kryptographisch signierten Bilddaten an die Datenbrille (100) auszusenden.

9. System (300) nach einem der Ansprüche 1, 7 oder 8, wobei die Signaturerstellungseinheit (200) eine Datenbank umfasst, und wobei der Prozessor (203) ausgebildet ist, die kryptographisch signierten Bilddaten in der Datenbank zu speichern.

10. Verfahren (400) zum kryptographischen Signieren von Bilddaten unter Verwendung einer Datenbrille (100) und einer Signaturerstellungseinheit (200), wobei die Datenbrille (100) eine Bildkamera (101), eine Authentifizierungseinrichtung (103) und eine Kommunikationsschnittstelle (105) umfasst, wobei die Datenbrille (100) durch einen Nutzer tragbar ist, und wobei die Signaturerstellungseinheit (200) eine Kommunikationsschnittstelle (201) und einen Prozessor (203) umfasst, mit:
Erfassen (401) eines Bildes durch die Bildkamera (101), um die Bilddaten zu erhalten, wobei die Bilddaten das erfasste Bild repräsentieren;
Authentifizieren (403) des Nutzers durch die Authentifizierungseinrichtung (103) unter Nutzung eines Tastenfeldes der Authentifizierungseinrichtung (103) zum Erfassen eines Kennwortes des Nutzers, wobei die Authentifizierungseinrichtung (103) das erfasste Kennwort mit einem vorgespeicherten Kennwort vergleicht, und den Nutzer authentifiziert, falls das erfasste Kennwort dem vorgespeicherten Kennwort entspricht;
ansprechend auf die Authentifizierung des Nutzers, Aussenden (405) der Bilddaten an die Signaturerstellungseinheit (200) durch die Kommunikationsschnittstelle (105) der Datenbrille (100), um die Bilddaten kryptographisch zu signieren;
Empfangen (501) der Bilddaten von der Datenbrille (100) durch die Kommunikationsschnittstelle (201) der Signaturerstellungseinheit (200); und
Verknüpfen (503) der empfangenen Bilddaten mit einem privaten Signaturschlüssel durch den Prozessor (203) der Signaturerstellungseinheit (200), um kryptographisch signierte Bilddaten zu erhalten, wobei der private Signaturschlüssel dem Nutzer zugeordnet ist.

11. Computerprogramm mit einem Programmcode zum Ausführen des Verfahrens (400) nach Anspruch 10 auf einem System nach Anspruch 1.

## Claims

1. A system (300) for cryptographically signing image data, the system (300) comprising:
data glasses (100) for sending out image data to a signature generation unit (200), wherein the data glasses (100) can be worn by a user, the data glasses (100) comprising:
an image camera (101) which is configured to capture an image in order to obtain the image data, wherein the image data represent the captured image;
an authentication device (103) which is configured to authenticate the user, wherein the authentication device (103) comprises a keypad for capturing a password of the user, and wherein the authentication device (103) is configured to compare the captured password with a pre-stored password, and to authenticate the user if the captured password corresponds to the pre-stored password;
a communication interface (105) which is configured, in response to the authentication of the user, to send out the image data to the signature generation unit (200) in order to cryptographically sign the image data; and
a signature generation unit (200) for communicating with the data glasses (100), the signature generation unit (200) comprising:
a communication interface (201) which is configured to receive the image data from the data glasses (100); and
a processor (203) which is configured to link the received image data with a private signature key in order to obtain cryptographically signed image data, wherein the private signature key is assigned to the user.

2. The system (300) according to claim 1, wherein the communication interface (105) of the data glasses (100) is configured to communicate with the signature generation unit (200) via a communication network (301), and wherein the communication interface (105) of the data glasses (100) is configured to send out the image data via the communication network (301) to the signature generation unit (200).

3. The system (300) according to claim 1 or 2, wherein the data glasses (100) comprise a memory, wherein the communication interface (105) of the data glasses (100) is configured to receive cryptographically signed image data from the signature generation unit (200), and wherein the communication interface (105) of the data glasses (100) is configured to store the cryptographically signed image data in the memory.

4. The system (300) according to one of the preceding claims, wherein the authentication device (103) comprises an acceleration sensor for capturing a movement pattern of the user, and wherein the authentication device (103) is configured to compare the captured movement pattern with a pre-stored movement pattern, and to authenticate the user if the captured movement pattern corresponds to the pre-stored movement pattern.

5. The system (300) according to claim 4, wherein the acceleration sensor is configured to detect a head movement pattern of the user as the movement pattern of the user.

6. The system (300) according to one of the preceding claims, wherein the data glasses (100) comprise a display device, and wherein the display device is configured to display the captured image to the user.

7. The system (300) according to claim 1, wherein the communication interface (201) of the signature generation unit (200) is configured to communicate with the data glasses (100) via a communication network (301), and wherein the communication interface (201) of the signature generation unit (200) is configured to receive the image data via the communication network (301) from the data glasses (100).

8. The system (300) according to claim 1 or 7, wherein the communication interface (201) of the signature generation unit (200) is configured to send out the cryptographically signed image data to the data glasses (100).

9. The system (300) according to one of claims 1, 7 or 8, wherein the signature generation unit (200) comprises a database, and wherein the processor (203) is configured to store the cryptographically signed image data in the database.

10. A method (400) for cryptographically signing image data using data glasses (100) and a signature generation unit (200), wherein the data glasses (100) comprise an image camera (101), an authentication device (103) and a communication interface (105), wherein the data glasses (100) can be worn by a user, and wherein the signature generation unit (200) comprises a communication interface (201) and a processor (203), the method (400) comprising:
capturing (401) an image by the image camera (101) to obtain the image data, wherein the image data represent the captured image;
authenticating (403) the user by the authentication device (103) using a keypad of the authentication device (103) for capturing a password of the user, wherein the authentication device (103) compares the captured password with a pre-stored password and authenticates the user if the captured password corresponds to the pre-stored password;
in response to authentication of the user, sending out (405) the image data to the signature generation unit (200) by the communication interface (105) of the data glasses (100) in order to cryptographically sign the image data;
receiving (501) the image data from the data glasses (100) by the communication interface (201) of the signature generation unit (200); and
linking (503) the received image data with a private signature key by the processor (203) of the signature generation unit (200) in order to obtain cryptographically signed image data, wherein the private signature key is assigned to the user.

11. A computer program comprising a program code for executing the method (400) according to claim 10 on a system according to claim 1.

## Revendications

1. Système (300) de signature cryptographique de données d'images comprenant :
des lunettes connectées (100) destinées à envoyer des données d'image à une unité de création de signature (200), les lunettes connectées (100) pouvant être portées par un utilisateur et comprenant :
une caméra d'imagerie (101) qui est configurée pour capturer une image afin d'obtenir les données d'image,
les données d'image représentant l'image capturée ;
un dispositif d'authentification (103) qui est configuré pour authentifier l'utilisateur,
le dispositif d'authentification (103) comportant un clavier servant à acquérir un mot de passe de l'utilisateur et le dispositif d'authentification (103) étant configuré pour comparer le mot de passe acquis avec un mot de passe préenregistré et pour authentifier l'utilisateur dans le cas où le mot de passe acquis correspond au mot de passe préenregistré ;
une interface de communication (105), laquelle est configurée pour, en réaction à l'authentification de l'utilisateur, envoyer les données d'image à l'unité de création de signature (200) afin de signer de manière cryptographique les données d'image ; et
une unité de création de signature (200) destinée à communiquer avec les lunettes connectées (100), pourvue d'une interface de communication (201) qui est configurée pour recevoir les données d'image de la part des lunettes connectées (100) ; et
un processeur (203), lequel est configuré pour lier les données d'image reçues avec une clé de signature privée afin d'obtenir des données d'image signées de manière cryptographique, la clé de signature privée étant associée à l'utilisateur.

2. Système (300) selon la revendication 1, l'interface de communication (105) des lunettes connectées (100) étant configurée pour communiquer avec l'unité de création de signature (200) par le biais d'un réseau de communication (301), et l'interface de communication (105) des lunettes connectées (100) étant configurée pour envoyer les données d'image à l'unité de création de signature (200) par le biais du réseau de communication (301) .

3. Système (300) selon la revendication 1 ou 2, les lunettes connectées (100) comprenant une mémoire, l'interface de communication (105) des lunettes connectées (100) étant configurée pour recevoir des données d'image signées de manière cryptographique de l'unité de création de signature (200) et l'interface de communication (105) des lunettes connectées (100) étant configurée pour enregistrer dans la mémoire les données d'image signées de manière cryptographique.

4. Système (300) selon l'une des revendications précédentes, le dispositif d'authentification (103) comportant un capteur d'accélération destiné à acquérir un modèle de mouvement de l'utilisateur et le dispositif d'authentification (103) étant configuré pour comparer le modèle de mouvement acquis avec un modèle de mouvement préenregistré et pour authentifier l'utilisateur dans le cas où le modèle de mouvement acquis correspond au modèle de mouvement préenregistré.

5. Système (300) selon la revendication 4, le capteur d'accélération étant configuré pour acquérir un modèle de mouvement de la tête de l'utilisateur en tant que modèle de mouvement de l'utilisateur.

6. Système (300) selon l'une des revendications précédentes, les lunettes connectées (100) comportant un dispositif d'affichage et le dispositif d'affichage étant configuré pour afficher l'image capturée à l'utilisateur.

7. Système (300) selon la revendication 1, l'interface de communication (201) de l'unité de création de signature (200) étant configurée pour communiquer avec les lunettes connectées (100) par le biais d'un réseau de communication (301) et l'interface de communication (201) de l'unité de création de signature (200) étant configurée pour recevoir les données d'image des lunettes connectées (100) par le biais du réseau de communication (301) .

8. Système (300) selon la revendication 1 ou 7, l'interface de communication (201) de l'unité de création de signature (200) étant configurée pour envoyer les données d'image signées de manière cryptographique aux lunettes connectées (100).

9. Système (300) selon l'une des revendications 1, 7 ou 8, l'unité de création de signature (200) comportant une base de données et le processeur (203) état configuré pour enregistrer les données d'image signées de manière cryptographique dans la base de données.

10. Procédé (400) de signature cryptographique de données d'images en utilisant des lunettes connectées (100) une unité de création de signature (200), les lunettes connectées (100) comportant une caméra d'imagerie (101), un dispositif d'authentification (103) et une interface de communication (105), les lunettes connectées (100) pouvant être portées par un utilisateur et l'unité de création de signature (200) comportant une interface de communication (201) et un processeur (203), comprenant les étapes suivantes :
capture (401) d'une image par la caméra d'imagerie (101) afin d'obtenir les données d'image, les données d'image représentant l'image capturée ;
authentification (403) de l'utilisateur par le dispositif d'authentification (103) en utilisant un clavier du dispositif d'authentification (103) pour acquérir un mot de passe de l'utilisateur, le dispositif d'authentification (103) comparant le mot de passe acquis avec un mot de passe préenregistré et authentifiant l'utilisateur dans le cas où le mot de passe acquis correspond au mot de passe préenregistré ;
en réaction à l'authentification de l'utilisateur, envoie (405) des données d'image à l'unité de création de signature (200) à travers l'interface de communication (105) des lunettes connectées (100) afin de signer de manière cryptographique les données d'image ;
réception (501) des données d'image de la part des lunettes connectées (100) à travers l'interface de communication (201) de l'unité de création de signature (200) ; et
liaison (503) des données d'image reçues avec une clé de signature privée par le processeur (203) de l'unité de création de signature (200) afin d'obtenir des données d'image signées de manière cryptographique, la clé de signature privée étant associée à l'utilisateur.

11. Programme informatique comprenant un code de programme pour mettre en œuvre le procédé (400) selon la revendication 10 sur un système selon la revendication 1.
